Europäisches Patentamt

European Patent Office

Office européen des brevets

(19)

(11) Veröffentlichungsnummer: **0 171 750**
**A2**

# (12) EUROPÄISCHE PATENTANMELDUNG

(21) Anmeldenummer: **85109940.8**

(22) Anmeldetag: **07.08.85**

(51) Int. Cl.⁴: **H04Q 11/04 , H04M 11/06**

(30) Priorität: **09.08.84 DE 3429397**

(43) Veröffentlichungstag der Anmeldung:
**19.02.86 Patentblatt 86/08**

(84) Benannte Vertragsstaaten:
**AT BE CH DE FR GB IT LI NL SE**

(71) Anmelder: **Siemens Aktiengesellschaft
Berlin und München Wittelsbacherplatz 2
D-8000 München 2(DE)**

(72) Erfinder: **Schaffer, Bernhard, Dipl.-Ing.
Waldheimstrasse 3
D-8034 Lochham(DE)**

(54) **Diensteintegrierendes Telekommunikationssystem für Schmalband- und Breitband-Dienste.**

(57) In einem ISDN für Schmalband- und Breitband-Dienste mit einem Sternnetz von Lichtwellenleiter-Teilnehmeranschlußleitungen und mit nebeneinander vorgesehenen Schmalband- und Breitband-Kopelanordnungen ist eine verkehrskonzentrierende bzw. -expandierende Teilnehmerkoppelstufe in Form eines optischen Koppelnetzwerks vorgesehen, an das einerseits die LWL-Teilnehmeranschlußleitungen angeschlossen sind und das andererseits über damit lediglich in den Zwischenleitungen vorgesehene opto-elektrische/elektro-optische Wandler und elektrische Demultiplexer/Multiplexer mit einem zentraler gelegenen elektrischen Breitbandkoppelnetzwerk verbunden ist.

EP 0 171 750 A2

Diensteintegrierendes Telekommunikationssystem für Schmalband- und Breitbanddienste.

Neuere Entwicklungen der Fernmeldetechnik führen zu diensteintegrierenden Telekommunikationssystemen für Schmalband- und Breitbanddienste. Ein solches Telekommunikationssystem kann in der Weise ausgebildet sein, daß als Übertragungsmedium in der Ebene der Teilnehmeranschlußleitungen etwa mit einer Bitrate von 140 Mbit/s betriebene Lichtwellenleiter vorgesehen sind, über die im elektrischen Multiplex sowohl Schmalbandkommunikatonssignale, wie 64-kbit/s-Fernsprech-Digitalsignale, als auch Breitbandkommunikationssignale, wie Bewegtbildkommunikationssignale, geführt werden, und über die auch eine Schmalbanddiensten und Breitbanddiensten gemeinsame Zeichengabe erfolgt, und daß in den Vermittlungsstellen (vorzugsweise eine gemeinsame Steuereinrichtung aufweisende) Schmalband-Koppeleinrichtungen und Breitband-Koppeleinrichtungen nebeneinander vorgesehen sind (DE-PS 2421002); in der Ebene der Teilnehmeranschlußleitungen ist in einem solchen diensteintegrierenden Breitband-Digitalnetz (Breitband-ISDN) eine Sternstruktur der Lichtwellenleiter zu bevorzugen.

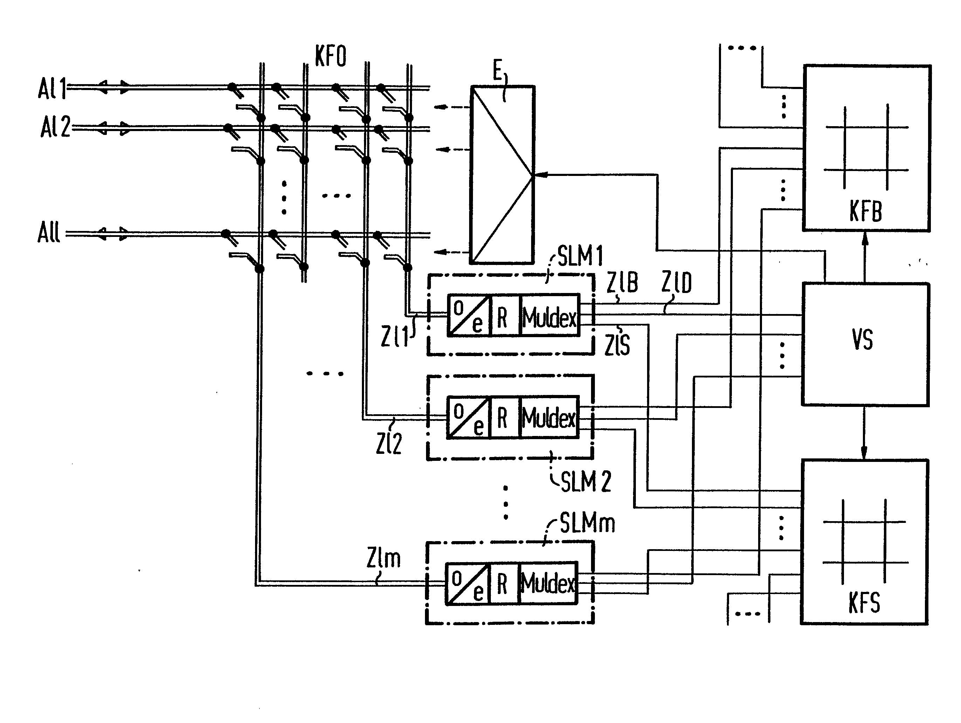

In einem solchen Breitband-ISDN ist der schaltungstechnische Aufwand in einer Endvermittlungsstelle überwiegend durch die Breitband-Teilnehmeranschlußschaltungen bedingt, die die Lichtwellenleiter-Teil nehmeranschlußleitungen mit opto-elektrischen und elektro-optischen Wandlern abschließen und über diesen Wandlern folgende Demultiplexer bzw. vorausgehende Multiplexer mit der Breitband-Koppelanordnung und der Schmalband-Koppelanordnung und deren ggf. gemeinsamer Steuereinrichtung verbinden, wobei die Breitband-Koppelanordnung zwischen den durch jeweils mindestens einen Lichtwellenleiter gebildeten Teilnehmeranschlußleitungen und einem zentraler gelegenen elektrischen Breitbbandkoppelnetzwerk eine Teilnehmerkoppelstufe zur Konzentration bzw. Expansion des Verkehrs von bzw. zu den Teilnehmeranschlußleitungen aufweisen kann (ISS'84 Proceedings Paper 23 C.1.1...7, FIG 4 und 5).

Es ist auch (z.B. aus DE-OS 3205029) bekannt, mit Hilfe optischer Bauteile optische Koppeleinrichtungen aufzubauen, die optische Breitbandsignale ohne Umsetzung in elektrische Signale vermitteln. Eine solche rein optische Breitbandsignalvermittlung erscheint indessen in Endvermittlungsstellen von diensteintegrierenden Breitband-Digitalnetzen, wie sie oben umrissen wurden, nicht als sinnvoll:

Zum einen werden die Koppeleinrichtungen mit elektrischen Signalen eingestellt, die aus den Signalisierungszeichen abgeleitet werden, die in den Schmalband- bzw. Signalisierungskanälen über die optischen Anschlußleitungen übertragen werden. Zumindest insoweit muß daher eine opto-elektrische Wandlung stattfinden, wobei dann, wenn, wie oben angegeben, Breitband- und Schmalbandsignale sowie Signalisierungszeichen im elektrischen Multiplex übertragen werden, das gesamte auf der Lichtwellenleiter-Anschlußleitung übertragene optische Signal ins elektrische umgesetzt werden muß. Dann können elektrische Breitbandsignale aber auch gleich in dieser Form vermittelt werden.

Zum anderen wird die auf den Teilnehmeranschlußleitungen vorgesehene Übertragungstechnik aus Aufwandsgründen nicht auf extreme Reichweiten optimiert sein; beim Übergang auf Verbindungsleitungen müssen daher die Breitbandsignale im allgemeinen regeneriert werden. Für das Regenerieren digitaler Bitströme ist man indessen für absehbare Zeit auf elektrische Verfahren angewiesen, da mit optischen Verstärkern zwar die Amplitude, nicht aber der zeitliche Verlauf der Digitalsignale wiederhergestellt werden kann. Wenn aber für das Regenerieren ohnehin eine Umsetzung in elektrische Signale erforderlich wird, wird zweckmäßigerweise auch gleich die Vermittlung elektrisch durchgeführt.

Die Erfindung stellt sich nun die Aufgabe, den in einem diensteintegrierenden Breitband-Digitalnetz mit Lichtwellenleiter-Teilnehmeranschlußleitungen in Sternstruktur erforderlichen Aufwand an Breitband-Anschlußschaltungen mit opto-elektrischen und elektro-optischen Wandlern zur Signalumsetzung und Demultiplexern und Multiplexern zur Auffächerung bzw. Zusammenfassung der Breitband-, Schmalband- und Signalisierungskanäle herabzusetzen.

Die Erfindung betrifft ein diensteintegrierendes Telekommunikationssystem für Schmalband- und Breitbanddienste, mit in Vermittlungsstellen nebeneinander vorgesehenen Schmalband-Koppelanordnungen und Breitband-Koppelanordnungen, wobei eine solche Breitband-Koppelanordnung zwischen den durch jeweils mindestens einen Lichtwellenleiter gebildeten Teilnehmeranschlußleitungen und einem zentraler gelegenen elektrischen Breitbandkoppelnetzwerk eine Teilnehmerkoppelstufe zur Konzentration bzw. Expansion des Verkehrs von bzw. zu den Teilnehmeranschlußleitungen aufweist.

Dieses Telekommuniktionssystem ist erfindungsgemäß dadurch gekennzeichnet, daß als Teilnehmerkoppelstufe ein optisches Koppelnetzwerk vorgesehen ist, an das zum einen die Lichtwellenleiter-Teilnehmeranschlußleitungen angeschlossen sind und das zum anderen über lediglich in den zwischen optischer Teilnehmerkoppelstufe und zentraler gelegenem elektrischen Breitbandkoppelnetzwerk verlaufenden Zwischenleitungen vorgesehene opto-elektrische /elektro-optische Wandler und elektrische Demultiplexer/Multiplexer mit dem elektrischen Breitbandkoppelnetzwerk verbunden ist; dabei können in weiterer Ausgestaltung der Erfindung zwischen den opto-elektrischen Wandlern und den elektrischen Demultiplexern auch Signalregeneratoren eingefügt sein.

Die Erfindung bringt den Vorteil mit sich, keinen teilnehmerindividuellen Aufwand für die opto/elektrische und elektro/optische Signalumsetzung, für das Demultiplexen und Multiplexen von Breitband- und Schmalbandkanälen und ggf. für die Signalregeneration vorsehen zu müssen, sondern den hierfür erforderlichen Aufwand in Abhängigkeit von den auf den Teilnehmeranschlußleitungen zu erwartenden Verkehrswerten um etwa den Faktor 4...10 reduzieren zu können. Dem gegenüber steht zwar der Aufwand für die optische Teilnehmerkoppelstufe, die indessen an die Stelle einer sonst vorzusehenden elektrischen Konzentrations- bzw. Expansionsstufe treten kann. Die erwähnte nachfolgende Signalregeneration macht es möglich, daß die übertragungstechnischen Anforderungen an die optische Konzentrations- bzw. Expansionsstufe nicht groß sein müssen.

Wird bei der Auswahl der optischen Koppelpunkte nicht ohnehin darauf geachtet, daß die Anschlußreichweite durch die durch das optische Koppelnetz hervorgerufene Signaldämpfung nicht zu stark verringert wird, so kann einer solchen Verringerung auch dadurch entgegengewirkt werden, daß in weiterer Ausgestaltung der Erfindung zusätzlich zu den optischen Koppelpunkten der optischen Teilnehmerkoppelstufe auch optische Verstärker in den optischen Signalwegen vorgesehen sind.

Um bei den vermittlungsseitig nicht durch eine individuelle Breitband-Teilnehmeranschlußschaltung abgeschlossenen Lichtwellenleiter-Teilnehmeranschlußleitungen Verbindungsanreize erkennen zu können, können in Weiterbildung der Erfindung über die optische Teilnehmerkoppelstufe alle freien Lichtwellenleiter-Teilnehmeranschlußleitungen zyklisch mit einer von Verbindungen freigehaltenen Anschlußschaltung des elektrischen Breitbandkoppelnetzwerks verbunden werden. Über diese Anschlußschaltung vermag dann ein Aktivierungsversuch des betreffenden Teilnehmers, beispielsweise in Form eines Einschaltens des Lichts oder in Form der Abgabe eines besonderen Bitmusters, in der Vermittlungssteuerung wirksam zu werden.

In der von der optischen Teilnehmerkoppelstufe abgehenden Übertragungsrichtung können nicht an einer Verbindung beteiligte Lichtwellenleiter-Teilnehmeranschlußleitungen dunkelgeschaltet sein; es ist in weiterer Ausgestaltung der Erfindung aber auch möglich, daß die nicht an einer Verbindung beteiligten Lichtwellenleiter-Teilnehmeranschlußleitungen mit einem optischen Amtstaktsignal beaufschlagt sind, um etwa einen Synchronismus zwischen Teilnehmerstellen und Netz aufrechtzuerhalten.

Anhand der Zeichnung sei die Erfindung noch näher erläutert.

Die Zeichnung zeigt schematisch in einem zum Verständnis der Erfindung ausreichenden Umfang ein Ausführungsbeispiel eines diensteintegrierenden Telekommunikationssystems gemäß der Erfindung. In diesem Telekommunikationssystem sind ein Sternnetz bildende Teilnehmeranschlußleitungen Al1, Al2...All vorgesehen, die jeweils durch (bei bidirektionalem Betrieb) einen oder auch (bei unidirektionalem Betrieb) zwei Lichtwellenleiter gebildet sein mögen und über die (in der Zeichnung nicht mehr dargestellte) Teilnehmerstellen des Telekommunikationssystems mit ihrer zugehörigen Vermittlungsstelle verbunden sind. Über diese Lichtwellenleiter-Teilnehmeranschlußleitungen Al1, Al2,...All mögen Schmalbandkommunikationssignale wie 64-kbit/s-Digitalfernsprechsignale und Steuersignale (Signalisierungszeichen) sowie Breitbandkommunikationssignale wie Bildfernsprechsignale von der Vermittlungsstelle zur Teilnehmerstelle und in umgekehrter Richtung von der Teilnehmerstelle zu der Vermittlungsstelle übertragen werden.

In der Vermittlungsstelle sind nebeneinander eine elektrische Schmalbandkommunikationssignale durchvermittelnde Schmalband-Koppelanordnung KFS und ein elektrische Breitbandkommunikationssignale durchschaltendes Breitbandkoppelnetzwerk KFB vorgesehen, die, wie dies auch in der Zeichnung angedeutet ist, eine (zumindest teilweise) gemeinsame Steuereinrichtung VS aufweisen können. Zwischen den Teilnehmeranschlußleitungen Al1, Al2,..., All und dem zentraler gelegenen elektrischen Breitbandkoppelnetzwerk KFB ist als eine den Verkehr von bzw. zu den Teilnehmeranschlußleitungen konzentrierende bzw. expandierende Teilnehmerkoppelstufe ein optisches Koppelnetzwerk KFO vorgesehen, das über eine Einstelleinrichtung E ebenfalls von der Vermittlungssteuerung VS her steuerbar ist. Dieses optische Koppelnetzwerk KFO, an das zum einen die Lichtwellenleiter-Teilnehmeranschlußleitungen Al1, Al2, All direkt angeschlossen sind, ist zum anderen über Zwischenleitungen Zl1, Zl2...Zlm, deren Anzahl m kleiner als die Anzahl l der Lichtwellenleiter-Anschlußleitungen ist, mit den elektrischen Koppeleinrichtungen KFB, KFS verbunden. Dabei ist in jede Zwischenleitung Zl eine Anschlußschaltung SLM eingefügt, die - in der einen Übertragungsrichtung gesehen - einen opto/elektrischen Wandler und einen nachfolgenden elektrischen Demultiplexer und - in der anderen Übertragungsrichtung gesehen - einen elektrischen Multiplexer und einen nachfolgenden elektro/optischen Wandler aufweist, wobei, wie dies auch in der Zeichnung angedeutet ist, zwischen dem opto/elektrischen Wandler und dem elektrischen Demultiplexer ein Signalregenerator R eingefügt sein möge.

Ein von einer Teilnehmerstelle über deren Lichtwellenleiter-Teilnehmeranschlußleitung Al zur Vermittlungsstelle gelangendes Multiplexsignal wird über das optische Koppelnetzwerk KFO zu einer Zwischenleitung Zl und damit zu der dieser Zwischenleitung zugehörigen Anschlußschaltung SLM durchgeschaltet, wo es zunächst opto/elektrisch umgesetzt, dann regeneriert und schließlich in die in ihm enthaltenen Einzelsignale, so in ein über das Schmalbandkoppelnetzwerk KFS weiterzuvermittelndes Schmalbandkommunikationssignal, ein von der Vermittlungssteuerung VS aufgenommenes Steuersignal und ein über das Breitband koppelnetzwerk KFB weiterzuvermittelndes Breitbandkommunikationssignal, aufgefächert wird. In der umgekehrten Übertragungsrichtung werden von dem Schmalbandkoppelnetzwerk KFS her durchvermittelte Schmalbandkommunikationssignale mit einem von dem Breitbandkoppelnetzwerk KFB her durchvermittelten Breitbandkommunikationssignal in der betreffenden Anschlußschaltung SLM zu einem elektrischen Multiplexsignal zusammengefaßt, das dann elektro/optisch umgesetzt wird und als optisches Signal von dem optischen Abschnitt der zugehörigen Zwischenleitung Zl her über das optische Koppelnetzwerk KFO zu der betreffenden Lichtwellenleiter-Teilnehmeranschlußleitung Al durchgeschaltet wird.

Es sei hier bemerkt, daß in der Zeichnung die Lichtwellenleiter-Teilnehmeranschlußleitungen Al, die optischen Abschnitte der Zwischenleitungen Zl und die die Demultiplexerausgänge/Multiplexereingänge der Anschlußschaltungen SLM mit dem Breitbandkoppelnetzwerk KFB, dem Schmalbandkoppelnetzwerk KFS bzw. der Vermittlungssteuerung VS verbindenden Zwischenleitungszweige ZIB, ZIS, ZID ebenso wie die Anschlußschaltungen SLM selbst in gewissermaßen einadriger Darstellung erscheinen, daß ebenso wie die Lichtwellenleiter-Teilnehmeranschlußleitungen Al aber auch die Lichtwellenleiter-Abschnitte der Zwischenleitungen Zl jeweils mit zwei richtungstrennend betriebenen Lichtwellenleiter realisiert sein können und daß die die elektrischen Einzelsignale übertragenden Zwischenleitungszweige ZIB, ZIS, ZID als Vierdrahtleitungen realisiert sein werden. Es sei außerdem bemerkt, daß in den optischen Abschnitten der Zwischenleitungen Zl auch optische Verstärker vorgesehen sein können, ohne daß dies in der Zeichnung näher dargestellt ist.

Über das optische Koppelnetzwerk KFO ist jede an einer Verbindung beteiligte Lichtwellenleite-Teilnehmeranschlußleitung Al für die Dauer der betreffenden Verbindung an diejenige zwischenleitungsindividuelle Anschlußschaltung SLM angeschaltet, über deren Zwischenleitung Zl die betreffende Verbindung verläuft. Dabei wird zweckmäßigerweise eine der Anschlußschaltungen SLM1, SLM2,...SLMm von solchen Verbindungen freigehalten, und es werden über die optische Teilnehmerkoppelstufe KFO alle freien, d.h. gerade nicht an einer Verbindung beteiligten Lichtwellenleiter-Teilnehmeranschlußleitungen Al zyklisch mit dieser freigehaltenen Anschlußschaltung SLM verbunden. Hierdurch wird erreicht, daß von bisher freien Teilnehmeranschlußleitungen ausgehende Verbindungsanreize in einem solchen Zyklus zu der Vermittlungssteuerung VS gelangen und damit von dieser erkannt werden können. Ein solcher Verbindungsanreiz kann dabei beispielsweise in der Form zur Anschlußschaltung SLM gelangen, daß der in der dorthin führenden Übertragungsrichtung bislang dunkelgeschaltete Lichtwellenleiter nunmehr hellgeschaltet ist. Alternativ kann anstelle einer Anschlußschaltung SLM zum Erkennen eines Verbindungsanreizes auch eine gesonderte Indikationsschaltung eingesetzt werden, wobei dann nach Erkennen eines Verbindungsanreizes auf eine Anschlußschaltung SLM umgekoppelt wird.

In der umgekehrten Übertragungsrichtung können freie, d.h. nicht an einer Verbindung beteiligte Lichtwellenleiter-Teilnehmeranschlußleitungen AI ebenfalls dunkelgeschaltet sein. Diese Lichtwellenleiter-Teilnehmeranschlußleitungen können aber auch, ohne daß dies in der Zeichnung noch näher dargestellt ist, mit einem optischen Amtstaktsignal beaufschlagt sein, um eine Synchronisierung auch der freien Teilnehmerstellen in Bezug auf das Netz aufrechterhalten zu können.

## Ansprüche

1. Diensteintegrierendes Telekommunikationssystem für Schmalband- und Breitbanddienste, mit in Vermittlungsstellen nebeneinander vorgesehenen Schmalband-Koppelanordnungen (KFS) und Breitband-Koppelanordnungen (KFB, KFO), wobei eine solche Breitband-Koppelanordnung (KFB, KFO) zwischen den durch jeweils mindestens einen Lichtwellenleiter gebildeten Teilnehmeranschlußleitungen (AI) und einem zentraler gelegenen elektrischen Breitbandkoppelnetzwerk (KFB) eine Teilnehmerkoppelstufe (KFO) zur Konzentration bzw. Expansion des Verkehrs von bzw. zu den Teilnehmeranschlußleitungen (AI) aufweist, **dadurch gekennzeichnet,** daß als Teilnehmerkoppelstufe ein optisches Koppelnetzwerk (KFO) vorgesehen ist, an das zum einen die Lichtwellenleiter-Teilnehmeranschlußleitungen (AI) angeschlossen sind und das zum anderen über lediglich in den zwischen optischer Teilnehmerkoppelstufe (KFO) und zentraler gelegenem elektrischen Breitbandkoppel netzwerk (KFB) verlaufenden Zwischenleitungen (ZI) vorgesehene opto-elektrische/elektro-optische Wandler (o/e) und elektrische Demultiplexer/Multiplexer (Muldex) mit dem elektrischen Breitbandkoppelnetzwerk (KFB) verbunden ist.

2. Telekommunikationssystem nach Anspruch 1 **dadurch gekennzeichnet,** daß zwischen den opto-elektrischen Wandlern (o/e) und den elektrischen Demultiplexern (Muldex) Signalregeneratoren (R) eingefügt sind.

3. Telekommunikationssystem nach Anspruch 1 oder 2, **dadurch gekennzeichnet,** daß zusätzlich zu den optischen Koppelpunkten der optischen Teilnehmerkoppelstufe (KFO) optische Verstärker in den optischen Signalwegen vorgesehen sind.

4. Telekommunikationssystem nach einem der Ansprüche 1 bis 3, **dadurch gekennzeichnet,** daß über die optische Teilnehmerkoppelstufe (KFO) alle freien Lichtwellenleiter-Teilnehmeranschlußleitungen (AI) zyklisch mit einer von Verbindungen frei gehaltenen Anschlußschaltung (SLM) des elektrischen Breitbandkoppelnetzwerks (KFB) oder mit einer gesonderten Verbindungsanreiz-Indikationsschaltung verbunden werden.

5. Telekommunikationssystem nach einem der Ansprüche 1 bis 4, **dadurch gekennzeichnet,** daß nicht an einer Verbindung beteiligte Lichtwellenleiter-Teilnehmeranschlußleitungen (AI) in von der optischen Teilnehmer-Koppelstufe (KFO) abgehender Übertragungsrichtung dunkelgeschaltet sind.

6. Telekommunikationssystem nach einem der Ansprüche 1 bis 4, **dadurch gekennzeichnet,** daß nicht an einer Verbindung beteiligte Lichtwellenleiter-Teilnehmeranschlußleitungen (AI) in von der optischen Teilnehmerkoppelstufe (KFO) abgehender Übertragungsrichtung mit einem optischen Amtstaktsignal beaufschlagt sind.